# EUROPEAN PATENT SPECIFICATION

(11) **EP 2 907 933 B1**
(45) Date of publication and mention of the grant of the patent: **02.06.2021**
(21) Application number: 15155459.9
(22) Date of filing: 17.02.2015
(51) Int. Cl.: E04B 5/04, E04B 5/02, E04B 5/08, E04B 5/26

(54) **PREFABRICATED FLOOR ELEMENT**
Vorgefertigtes Deckenelement
Elément de plancher préfabriqué

(30) Priority: 18.02.2014 NL 2012280
(43) Date of publication of application: 19.08.2015
(73) Proprietor: IsoBouw Systems B.V., 5711 EG Someren (NL)
(72) Inventor: Rensen, Petrus Frederikus Maria, 6686 MH Doornenburg (NL); Van Der Burgt, Petrus Henricus Johannes, 6631 KW Horssen (NL)
(74) Representative: Algemeen Octrooi- en Merkenbureau B.V.

(56) References cited:
- EP-A- 0 288 385
- EP-A- 1 126 095
- WO-A1-2006/134581
- FR-A1- 2 575 205
- FR-A1- 2 951 754
- FR-A2- 2 432 578
- JP-A- H04 185 326
- US-A- 4 841 702
- US-A1- 2006 075 707
- US-B1- 6 817 150

## Description

The present invention relates to a prefabricated floor element. Such a prefabricated floor element is known, for example as a so-called ribbed slab floor. The cover layer and the at least one rib of the structural part of a ribbed slab floor together form an integral part of poured concrete. This does not exclude the possibility that the at least one rib is poured from a different type of concrete than the cover layer. In practice the prefabricated floor element will generally comprise a number of insulating parts arranged one behind the other, each having a dimension, in the longitudinal direction of the prefabricated floor element, of 1.0 or 1.2 m, for example. The structural part functions to give the floor element the required strength, so that the floor element can span a particular distance when the floor element is supported at the ends thereof. The structural part is for that purpose provided with reinforcement. The insulating part is provided so as to give the floor element the required thermal insulation properties. Unlike hollow core slab floors, whose insulating part is in the form of a flat plate having a constant thickness, the (at least one) insulating part of a ribbed slab floor has a corrugated shape in cross-section because of the connection at the upper side of the insulation part to the bottom side of the structural part. The bottom side of the insulating part and thus of the floor element forms a heat-emitting surface. The relevant requirements as regards the insulation values or thermal resistance (expressed in the required Rc value) can vary from project to project. That is why manufacturers frequently offer ribbed slab floors in variants having different thermal insulation properties. The floor elements of a particular series in that case do not differ from each other as regards the shape of the structural part but they do differ from each other as regards the shape of the insulating part, so that also the overall shape of the variants of the floor elements are different from each other, or as regards the quality of the insulation material of which the insulation part is made. These differences must be taken into account in the design of a building, the result of which may for example be that if the requirements regarding the thermal insulation properties of a floor of a building change during the design process, this will directly affect the design itself. By way of illustration reference is made to the so-called PLUS ribbed slab floor of Betonson, which has a height (or thickness) of 350 mm in one variant and a height of 400 mm in another variant. The latter variant has better thermal insulation properties.

As an aside it is noted that in United States publication US 6,817,150 B1 a floor system is described in which use is made of panels which jointly extend over the entire area of a floor to be constructed and which are made of one plastic insulation material. Slots are provided in the upper side of the panels to provide space for a concrete covering floor which is poured on the panels in situ. In said slots, concrete ribs are then formed. The publication describes how additional plastic "hats", the material of which "hats" has a lower specific weight than that of the panels, can be placed on the panels between the slots so as to increase the height of said ribs to render the floor suitable for larger spans.

The content of French publication FR 2,951,754 A1 is in part comparable to that of US 6,817,150 B1. The floor system described in the French publication makes use of plastic panels which are likewise constructed in situ and which makes use of side-by-side panels of plastic material. The panels jointly take up the entire area of a floor to be constructed. The panels are configured so that grooves are formed between the panels. Concrete is poured into said grooves and on the panels in situ. The French publication describes how further plastic panels can be used under the aforesaid panels, which further panels likewise take up the entire area of the floor to be constructed and which may be made of a plastic material whose density is different from that of the overlying panels, for example.

Over the years, increasingly strict environmental legislation has led to increasingly stringent requirements as regards the Rc values of floors. For this reason prefabricated floor elements having thicker insulation parts are used. An important drawback of that variant is that builders must dig increasingly deep below the surface level to provide sufficient space for the floor elements and the associated foundations. This leads to higher costs. Alternatively it may be decided to make use of higher-grade insulation materials, so that a thinner insulation part can be used. The use of higher-grade insulation materials again involves relatively high costs, however. The object of the present invention is to offer a solution to the above problems or at least an improvement in that regard. In order to achieve that object, the invention provides a prefabricated floor element according to claim 1. In those cases where terms such as "upper side", "bottom side", "beside", "vertical", "horizontal" or the like are used in the foregoing or the following, these terms are to be interpreted in relation to the situation of the floor elements in use, i.e. horizontal. A cross-section extends perpendicular to the longitudinal direction of the at least one rib, parallel to the transverse direction and the vertical direction of the floor element. The floor elements as a whole can each be regarded as being substantially plate-shaped.

By making use in the invention of at least two insulation parts, each made of a plastic material, wherein the coefficients of thermal conductivity of the respective plastic materials of the at least two insulation parts are different from each other, it becomes possible to adapt the position and/or the thermal insulation properties of the material of the insulation parts in those cases where locally different requirements apply for the insulation properties of the insulation part within the area (in top plan view) of the floor element on account of the configuration of the structural concrete part with at least one rib, as a result of which the thickness of the concrete part varies. The material of the insulating part can thus be used more efficiently, also in view of the specific insulation requirements to be made of the floor element in question. This makes it possible to reduce the consumption of raw materials for the production of floor elements. The use of at least two insulation parts gives the designer more freedom in designing the floor elements. The designer has to deal not only with requirements regarding the strength and insulation properties of the floor element, but also with other requirements, for example with regard to acceptable production costs or maximum allowable thickness of the floor element. The aspect that the at least two insulation parts comprise at least one first insulation part of a first material and a second insulation part of a second plastic material, wherein the coefficient of thermal conductivity of the first material is lower than the coefficient of thermal conductivity of the second material, and the first insulation part extends at least in part directly under the at least one, makes it possible, thanks to the invention, to use better insulation material locally, viz. directly under the ribs, so that the thickness of the insulation part directly under the ribs, which thickness in practice determines the thickness of the floor element as a whole, can be reduced. This offers advantages, for example as regards the excavation depth needed for constructing a ground floor using floor elements according to the invention. Since the at least one first insulation part only extends over part of the width of the insulating part, the higher-grade and thus as a rule more expensive first material for the at least one first insulation part can be efficiently utilised.

The thickness of the insulating part insofar as it extends directly under the at least one rib can in particular be reduced if the at least one first insulation part extends at least over the greater part of the volume of the insulating part insofar as the latter extends under the at least one rib, or if the at least one first insulation part even extends over the entire part of the volume of the insulating part insofar as the latter extends directly under the at least one rib.

In particular if the insulation part comprises a first insulation part for each rib, the higher-grade and thus as a rule more expensive first material for the at least one first insulation part can be efficiently utilised.

The at least one first insulation part may also be a preformed insulation part which, at least in cross-, is surrounded by and located adjacent to another insulation part, such as a second insulation part or a third insulation part (yet to be discussed) of the insulation part, at least on the upper side and on the sides of the at least one first insulation part, wherein the other insulation part is made of a different plastic material and wherein the coefficient of thermal conductivity of the other plastic material is higher than the coefficient of thermal conductivity of the third material. This possible embodiment of the invention can offer advantages in particular if the at least one first insulation part is selected from a group of high-grade insulation parts such as insulation parts of the Vacuum Insulated Panel (VIP) type, of aerogel, resol foam, polyisocyanurate foam or polyurethane foam. Such high-grade insulation parts are characterised by a relatively low to very low coefficient of thermal conductivity of at most 0.025 W/mK and typically between 0.004 W/mK and 0.015 W/mK.

Such first insulation parts are preferably surrounded for the greater part. Within that framework it is preferable if, in cross-section, the at least one first preformed insulation part is fully surrounded by and located adjacent to the other insulation part and/or if, in vertical longitudinal section, the at least one first preformed insulation part is surrounded by and located adjacent to the other insulation part, at least on the upper side and on the sides of the at least one first insulation part, or if, in said vertical longitudinal section, the at least one first preformed insulation part is even fully surrounded by and located adjacent to the other insulation part. The risk of damage to the at least one first insulation part is thus reduced. Specifically in the case of insulation parts of the VIP type such damage could lead to the vacuum being released, resulting in a dramatic decrease of the insulation value.

In an advantageous embodiment of a prefabricated floor element according to the invention, the at least two insulation parts further comprise at least one third insulation part of a third plastic material, wherein, at least in cross-section, the at least one third insulation part is surrounded by and located adjacent to the second insulation part, at least on the upper side and on the sides of the at least one third insulation part, preferably on the entire upper side or on the entire sides of the at least one third insulation part, wherein the coefficient of thermal conductivity of the second plastic material is lower than the coefficient of thermal conductivity of the third plastic material, and wherein the at least one third insulation part is at least in part, preferably entirely, provided beside the at least one rib. The space that is available besides the at least one rib, or between the ribs if at least two ribs are provided, can be advantageously utilised for providing insulation material having a relatively high coefficient of thermal conductivity, and possibly a relatively low specific weight, at that location, so that also the surface area of the heat-dissipating surface on the underside of the insulating part can be smaller. In this preferred embodiment, the insulation part comprises at least three insulation parts, each of a different type or each made of a material having a different coefficient of thermal conductivity. The first insulation part (or the first insulation parts) whose first material has the lowest coefficient of thermal conductivity can thus be used directly under the at least one rib, whilst the third insulation part (or the third insulation parts) whose third material has the highest coefficient of thermal conductivity can be provided beside the at least one rib. The (at least one) second insulation part whose second material has a coefficient of thermal conductivity that ranges between the aforesaid two coefficients of thermal conductivity can thus form a physical bridge between the two types of insulation parts.

The requirements made of the dimensional stability of the at least one third insulation part can be relatively low in particular if, in cross-section, the at least one third insulation part is fully surrounded by and located adjacent to the second insulation part.

Furthermore preferably, likewise in vertical longitudinal section, the at least one third insulation part is surrounded by and located adjacent to the second insulation part on the upper side and on the sides of the at least one third insulation part, preferably on the entire upper side and the entire sides of the at least one third insulation part, or, in vertical longitudinal section, the at least one third insulation part is fully surrounded by and located adjacent to the second insulation part.

Within the framework of the aim of producing floor elements at the lowest possible cost it may be advantageous if each of the at least one third insulation parts has an at least substantially rectangular shape, in cross-section.

In order to ensure that the insulation part as such possesses sufficient strength, it may be advantageous if the insulating part comprises at least two third insulation parts arranged side by side.

The more the at least one third insulation part is surrounded by the second insulation part, the smaller the risk of damage to the at least one third insulation part will be. The requirements to be made as regards the dimension all stability of the at least one second insulation part can thus be lowered. Within this context another embodiment of the invention is characterised in that the at least one third insulation part has a compressive strength of less than 40 kPA. The structural part preferably comprises at least two parallel ribs, preferably at or at least near opposite long sides of the floor element. Increasing the number of ribs makes it possible to reduce the height of each individual rib (dimension of the rib in the thickness direction of the floor element) and thus the thickness of the floor element.

The invention is furthermore suitable in particular for floor elements in which the first plastic material and the second plastic material of the at least one first insulation part and the second insulation part, respectively, as well as possibly the third plastic material of the at least one third insulation part are foamed materials.

The present document also relates to an insulating part as such for use in a floor element according to the invention as discussed in the foregoing, whether or not in relation to preferred embodiments thereof. More specifically, the insulating part has an upper side which is at least substantially flat in part and in which at least one recess extending in the longitudinal direction of the insulating part is provided for receiving the at least one rib of the structural part of the floor element at a later stage, wherein the insulating part comprises at least two insulation parts, each of a plastic material, wherein the coefficients of thermal conductivity of the respective plastic materials of the at least two insulation parts are different from each other, in any case being lower than 0.08 W/mK, wherein the at least two insulation parts comprise at least one first insulation part of a first material and a second insulation part of a second plastic material, wherein the coefficient of thermal conductivity of the first material is lower than the coefficient of thermal conductivity of the second material and wherein the first insulation part extends at least in part directly under the at least one recess. It is expressly stated that a recess may also be provided directly on a long side of the insulation part, in which case the recess does not have two upright longitudinal walls, therefore, but only one.

Within the scope of previously discussed possible preferred embodiments of prefabricated floor elements according to the invention it is therefore possible that the insulating parts according to the invention are configured to form part of prefabricated floor elements according to preferred embodiments thereof.

As will become apparent hereinafter, the insulating part according to the invention also offers makes it advantageously possible to form the insulating part as one whole in a mould having a closed mould space. Accordingly it is also advantageous if the insulating part as a whole is formed in a mould having a closed mould space.

The present document further provides a method for producing an insulating part according to the invention for use in a floor element according to the invention. The method comprises the steps of
A moving wall parts of a mould together for closing a mould space associated with the mould, wherein the wall parts include at least one recess portion for forming at least one recess in the insulating part at that location,
B dividing the mould space into at least one first mould section space and a second mould section space, using at least one separating element,
C1 supplying an amount of the starting material for the first plastic material to the at least one first mould sections space,
C2 supplying an amount of the starting material for the second plastic material to the second mould section space,
D1 causing the starting material supplied to the at least one first mould section space during step C1 to form at least partially into the at least one first insulation part,
D2 causing the starting material supplied to the second mould section space during step C2 to form at least partially into the second insulation part, wherein the coefficients of thermal conductivity of the first plastic material and of the second plastic material are different from each other, in any case being lower than 0.08 W/mK,
E moving the at least one separating element out of the mould space during steps D1 and D2,
F moving the wall parts of the mould apart for opening the mould space,
G removing the insulation part from the mould space.

Insulating parts according to the invention can thus be produced in a fully automated or at least practically fully automated process at a low cost price and a high production rate. Steps D1 and D2, which are preferably carried out simultaneously, and step E effect a good bond between the at least one first insulation part and the second insulation part.

A good bond between the at least one first insulation part and the second insulation part is obtained in particular if the at least one separating element is plate-shaped and remains in its own plane, at least within the mould space, during step E.

To obtain an insulating part having advantageous insulation properties, it is advantageous if the at least one separating element abuts against an upright part of the at least one recess portion of the wall parts of the mould during step B.

A production process for insulation parts as described above is advantageous from the viewpoint of costs and can be obtained if at least the forming of the at least one first insulation part and the second insulation part according to steps D1 and D2 takes place by foaming respective starting materials for the first plastic material and the second plastic material.

Specifically for producing an insulating part for use in a floor element whose insulating part comprises at least one third insulation part of a third plastic material, wherein, at least in cross-section, the at least one third insulation part is surrounded by and located adjacent to the second insulation part, at least on the upper side and on the sides of the at least one third insulation part, preferably on the entire upper side and on the entire sides of the at least one third insulation part, wherein the coefficient of thermal conductivity of the second plastic material is lower than the coefficient of thermal conductivity of the third plastic material, and wherein the at least one third insulation part is at least in part, preferably entirely, provided beside the at least one rib, it is preferable if the method comprises the steps of
B1 moving at least part of a wall part of the mould after steps C2 and D2, so that the mould space will become larger and the enlarged part will form at least one third mould section space,
C3 supplying an amount of starting material for the third plastic material to the at least one third section space,
D3 causing the starting material for the third plastic material supplied to the at least one third mould section space during step C3 to form at least partially into at least one third insulation part, or at least a part thereof.

To create a situation in which, in cross-section, the at least one second insulation part is fully surrounded by and located adjacent to the first insulation part, the method preferably comprises the steps of
B2 moving the at least one part of a wall part of the mould further after step D3, so that the mould space will be further enlarged,
C4 supplying an amount of starting material for the second plastic material to the part of the mould space that has been further enlarged during step B2,
D4 causing the starting material for the second plastic material that has been supplied to the further enlarged part of the mould space during step C4 to form at least partially into a further part of the second insulation part.

Such a method would also be used in the production of an insulating part that does not comprise (a) first insulation part(s). Such a method will not comprise the aforesaid steps relating to the at least one first insulation part, therefore.

The invention will now be explained in more detail by means of a description of a possible embodiment of a prefabricated floor element according to the invention as defined in the claims comprising an insulating part and also by means of a description of a method for producing the insulating part, in which descriptions reference is made to the following figures:
Figures 1 and 2 show in cross-section and isometric bottom view, respectively, two prefabricated floor plates according to the invention arranged side by side;
Figures 3-6 are schematic cross-sections showing successive stages during the production of the insulating part of a prefabricated floor element in a mould 1 according to figures 1 and 2.

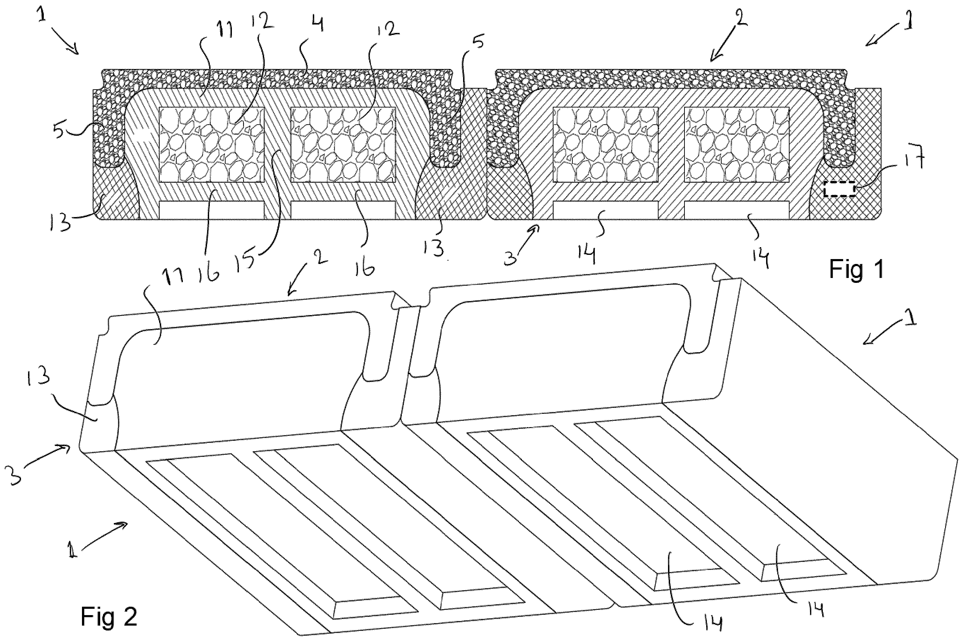

In figures 1 and 2, two side-by-side prefabricated floor plates 1 according to the invention are shown. The floor plate 1 is of the ribbed slab type. From such floor plates a system floor, more specifically a ribbed slab floor as known to the skilled person, can be constructed in a building. In such a ribbed slab floor the floor plates 1 lie side by side, being supported at their short ends on support edges extending transversely to the longitudinal direction of the floor plates 1. The floor plate 1 comprises a structural part 2 at the upper side of the floor plate 1 and an insulating part 3 at the bottom side of the floor plate 1.

The structural part 2 is made of (prestressed) concrete and is built up of a cover layer 4 and two downwardly extending ribs 5, which join the cover layer 4 at the bottom side thereof, at the longitudinal edges of the cover layer. In particular the (prestressed) ribs 5 give the structural part 2, and thus the floor plate 1, the strength required for bridging a specific distance.

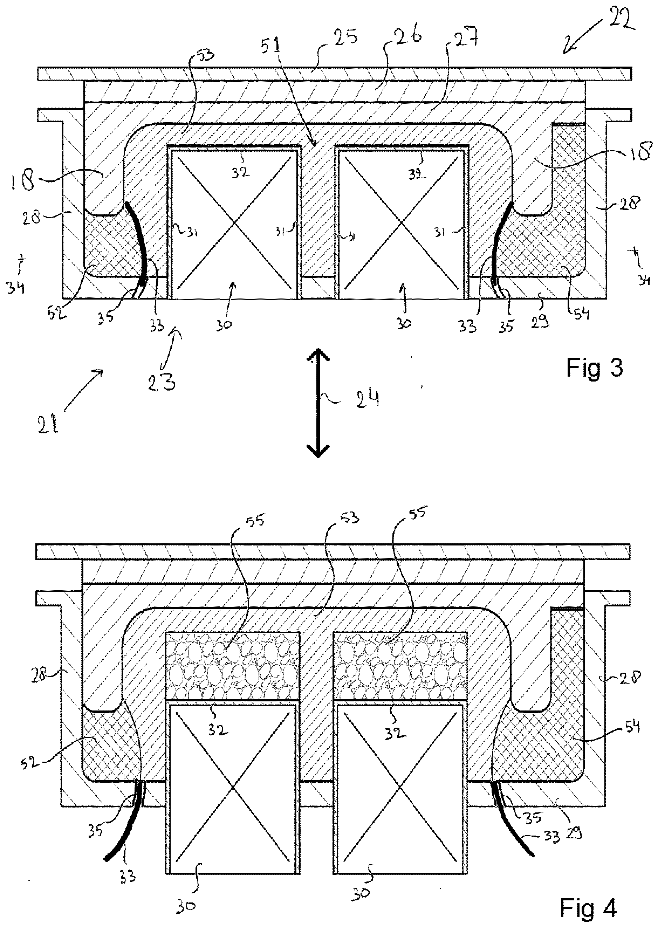

The insulating part 3 has been produced as one whole, as will be explained in more detail yet with reference to figures 3-6, and comprises two first insulation parts 13, a second insulation part 11 and two third insulation parts 12, which insulation parts 11, 12 and 13 are adjacent to each other and connected to each other. The insulation parts 11, 12, 13 are each made of plastic material, more specifically a foamed plastic such as expanded polystyrene (EPS), for example. The insulation parts 11, 12, 13 are different from each other as regards their thermal insulation properties. This difference expresses itself in the coefficient of thermal conductivity of the plastic material of which the respective insulation parts 11, 12, 13 are made. The coefficient of thermal conductivity of the materials of the insulation parts 11, 12, 13 is in any case lower than 0.08 W/mK for each of said materials. The lower the coefficient of thermal conductivity is, the better the thermal insulation properties will be. The material of the two first insulation parts 13 has the lowest coefficient of thermal conductivity, whilst the material of the two third insulation parts 12 has the highest coefficient of thermal conductivity. This means, therefore, that the coefficient of thermal conductivity of the material of the second insulation part 11 ranges between that of the material of the third insulation parts and that of the material of the first insulation parts. Typical values for the coefficients of thermal conductivity in question range between 0.04 and 0.07 W/mK for the material of the third insulation parts 12, between 0.035 and 0.045 W/mK for the material of the second insulation part 11 and between 0.028 and 0.035 W/mK for the material of the first insulation parts 13.

The third insulation parts 12 have a rectangular shape not only in cross-section, as shown in figure 1, but also in horizontal and in vertical longitudinal section. The plastic EPS material of which the third insulation parts 12 are made is not necessarily dimensionally stable. The reason for this may be that the material of the third insulation parts 12 has a low specific weight or because the material of the third insulation parts 12 is a low-grade starting material, such as recycled plastic material. The third insulation parts 12 are provided beside the ribs 5, more specifically between ribs 5 under the region where the structural part 2 is relatively thin. This implies that a relatively great part of the thickness of the floor plate 1 between the two ribs 5 is available for providing material for the insulating part 3 at that location. Said available thickness is advantageously utilised in the invention by using a relatively low-grade insulation material in the two third insulation parts 12 at that location. The vertical bridge portion 15 of the second insulation part 11 between the two third insulation parts 12 and the horizontal bridge portions 16 of the second insulation part 11 under the two third insulation parts 12 increase the stiffness of the insulating part 3. This is of importance during the production process of the floor plates 1, because persons walk on the insulating part 3 when concrete is being poured onto the insulating part 3 for forming the structural part 2 and the insulating part 3 must therefore be capable of carrying the combined weight of said persons and the concrete.

The two third insulation parts 12 are fully surrounded by the second insulation part 11 not only in cross-section as shown in figure 1 but also in vertical and horizontal longitudinal section, with the EPS material of the second insulation part 11 located adjacent to the entire outer surface of the two third insulation parts 12. The fact that the third insulation parts 12 may not be dimensionally stable, or only to a very limited extent, appears from the fact that the plastic material of the third insulation parts 12 has a compressive strength of less than 40 kPa. The (second insulation part 11 extends over the entire height of the insulating part 3.

The two first insulation parts 13 are different from each other as regards their shape, in the sense that in figure 1 the right-hand first insulation part 13 extends on the outer side of the structural part 2 besides the rib 5 on that outer side of the floor plate 1. The two first insulation parts 13 have in common the fact that they extend in the immediate vicinity of the ribs, more specifically on the bottom side of a rib 5. The first insulation parts 13 take up the entire space of the insulating part 3 directly under the ribs 5 and extend along the entire length of the ribs 5; in transverse direction, however, i.e. transversely to the longitudinal direction of the ribs 5, they only extend in the immediate vicinity of the ribs rather than over the entire width of the insulating part. The use at those positions of an insulating part, such as the first insulation parts 13, having high-grade insulation properties achieves that the thickness of the floor plate 1 can remain within bounds and that nevertheless a relatively high Rc value for the floor plate 1 can be obtained. If it would have been decided not to use first insulation parts 13 in the design the floor plate 1 but to make use in that region of the insulating part 3 of the same material as the material of which the second insulation part 11 is made, this would have meant that the insulating part 3 would have a greater height under the ribs 5, which would add to the total thickness of the floor plate 1.

It is also conceivable to use an alternative preformed insulation part at least directly under the ribs 5, which insulation part is selected from a group of high-grade insulation parts such as insulation parts of the Vacuum Insulated Panel (VIP) type of aerogel, resol foam, polyisocyanurate foam or polyurethane foam. Such high-grade insulation parts are characterised by a relatively low to very low coefficient of thermal conductivity of at most 0.025 W/mK and typically between 0.004 W/mK and 0.015 W/mK. Such preformed insulation parts could be configured as strips, for example, which are partially or entirely surrounded, at least in cross-section and possibly also in horizontal and vertical longitudinal section, by another insulation material, such as the material of the first insulation parts 13 or of the second insulation part 11. In the latter case there would be no separate first insulation parts 13 as described in the foregoing but the second insulation part 11 would be extended with the regions taken up by the first insulation parts 13 in figures 1 and 2. In the right-hand floor element 1 in figure 1 such an alternative insulation part is indicated in dotted lines and by numeral 17. The use of such an alternative preformed insulation part 17 makes it possible to use a thinner floor element 1 or design it to have a higher thermal resistance while using the same thickness.

Finally it is noted that the insulating part 3 comprises rectangular recesses 14 in the bottom side of the insulating part 3, and thus in the bottom side of the floor plate 1, directly under the two third insulation parts 12. These two recesses 14 are provided in view of the production process of floor plates 1, more specifically of the insulating part 3 thereof, which will be explained in more detail yet with reference to figures 3-6. It is also possible for the bottom side of the insulating part 3 to be entirely flat, for example, without any recesses such as the recesses 14. It is noted that within the framework of the present invention a recess may also be provided at an (edge of an) insulating part 3.

Figure 3 shows a mould 21 for forming an insulating part 3 therein. The mould 21 comprises a first moulds in section 22 and a second mould section 23, which can move toward and away from each other as indicated by double arrow 24, so that the situation shown in figures 3-6 can be realised.

The first mould section 22 comprises a mould plate 25, a spacer plate 26 and a mould core 27, which are rigidly albeit detachably interconnected. The mould core 27 has essentially the shape of the structural part 2. The inner side of the mould core 27 forms the actual mould wall and partially determines the shape of the insulating part 3 as it is formed as a whole within the mould. The mould core 27 comprises recess portions 18 for forming the recesses in the insulating part 3 for the ribs 5.

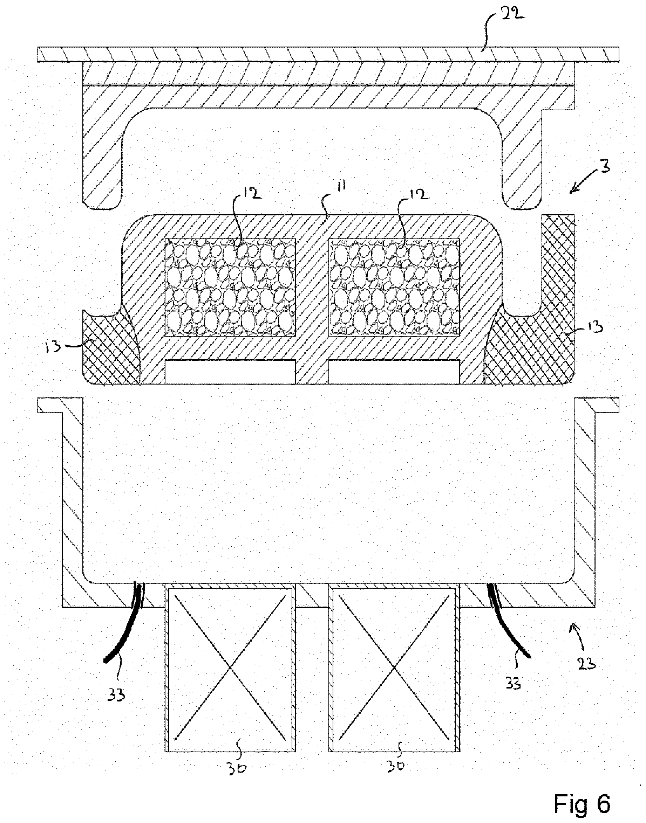

The second mould section 23 is substantially bin-shaped with upright walls 28 and a bottom 29. The second mould section 23 further comprises two mould cores 30 which can move relative to the bottom 29 between a first position as shown in figure 3 and a second position as shown in figure 6, likewise as indicated by double arrow 24. The mould cores 30 are beam-shaped, extending along practically the entire length (perpendicular to the plane of drawing) of the mould 21. In the present example, the length of the mould cores 30 corresponds to that of the recesses 14. Alternatively it is also possible to use a number of moulds cores having a length of 1 metre, for example, arranged in line with each other, spaced apart by a distance equal to the width of the bridge portion 15, for example. In horizontal longitudinal section, the mould cores 30 may have a shape other than rectangular, for example oval. The moulds cores 30 each comprise upright mould wall portions 31 (also at the short ends of the mould cores 30) and a horizontal mould wall portion 32 directed toward the mould core 2.

The second mould section 23 further comprises two arcuate separating plates 33. The separating plates 33 extend along the entire length of the mould 21 and can pivot forward and backward about a pivot axis 34 relative to the bottom 29 and the upright walls 28 of the second section 23 between a first position shown in figure 3, in which the upper longitudinal edge abuts against the recess portions 18 of the mould core 27 and the lower longitudinal edge is located under the upper side of the bottom 29, and a second position shown in figures 4-6, in which the upper longitudinal edge of the separating plate 33 is located at the same level as the inner side of the bottom 29. During the aforesaid pivoting, the separating plates 33 remain in their respective own planes, so that no material is pressed aside by the separating plates 33. To make the aforesaid pivoting of the arcuate separating plates 33 possible, two arcuate recesses 35 are provided in the bottom 29. Alternatively it is also possible to use flat separating plates, which can translate in such a manner that the separating plates will remain in their own plane. It is also conceivable to move said separating plates into and out of the mould space in the direction perpendicular to the plane of drawing, for example by translating the same, which could also be possible for the arcuate separating plates 33.

The mould 21 further comprises steam chambers (not shown). A first steam chamber is associated with the first mould section 22 and is provided above said mould section. A second steam chamber is associated with the second mould section 23 and is provided on the outer side beside and below the second mould section 23. Relatively small steam chambers are furthermore provided directly under the horizontal mould wall parts 32 of the mould cores 30. The steam chambers are connected, via one or a number of supply lines, to a steam source for supplying steam and, via one or a number of discharge lines, to a condenser for the discharge of (used) steam. Furthermore, steam nozzles (not shown) are provided in the mould walls of the mould 21, via which steam from a steam chamber can be admitted into the mould space or, on the contrary, used steam can be discharged from the mould space to another steam space. The steam is used for causing granular EPS starting material that is present in the closed mould to bind together and convert into a foam-like unit. In the mould walls 21, injectors (not shown) are provided for supplying the granular EPS starting material, via which injectors the granular starting material can be supplied to the (various parts of the) mould space.

Figure 3 shows the mould 21 in the closed position, in which the mould core 27 falls just within the upright walls 28. A mould space 51 is present between the first mould section 22 and the second mould section 23. The arcuate separating plates 33 are in the first position. The mould cores 30 are likewise in the first position. Because the arcuate separating plates 33 are in the first position, the mould space is divided into three regions 52, 53, 54. To produce an insulating part 3, granular foamable plastic EPS material is supplied to the regions 52 and 54 via injectors. The grains in question are of a quality such that they can be foamed into the material of the first insulation parts 13 by adding steam to the regions 52, 54 in question. Via one or a number of other injectors, granular foamable plastic EPS material is supplied also to the region 53, which material is converted into foam after steam has been added to the region 53. Pivoting the separating plates 33 from the first position to the second position shown in figure 4 during the foaming of the grains within the regions 52, 53, 54 achieves that a good bond is obtained between the material of the two first insulation parts 13 and the material of the second insulation part 11. Initially, the supply of steam to the regions 52, 53 and 54 takes place for only a relatively short time, for example only two seconds. This short steaming time suffices for creating cohesion between the grains, but it does not suffice for obtaining the compressive strength required for the final product.

In a next stage of the production process, the mould cores 30 move from the first position in the direction of the second position until they take up the position shown in figure 4. Partially on account of the cohesion between the EPS grains obtained in the regions 51, 52, 53 during the previous stage, the mould space is thus enlarged with two regions 55, to which granular foamable plastic EPS material is supplied via injectors provided in the horizontal mould wall parts 32. This material, too, is subsequently foamed by means of steam, so that the two third insulation parts 12 are formed in the regions 55. The duration of the steaming of the material in the regions 55 is relatively short, for example two seconds, and again just sufficient for creating cohesion between the grains in question. Because of the relatively short steaming time of the material in the region 53 during the previous stage, a bond is obtained also between the materials in the region 53 and the regions 55.

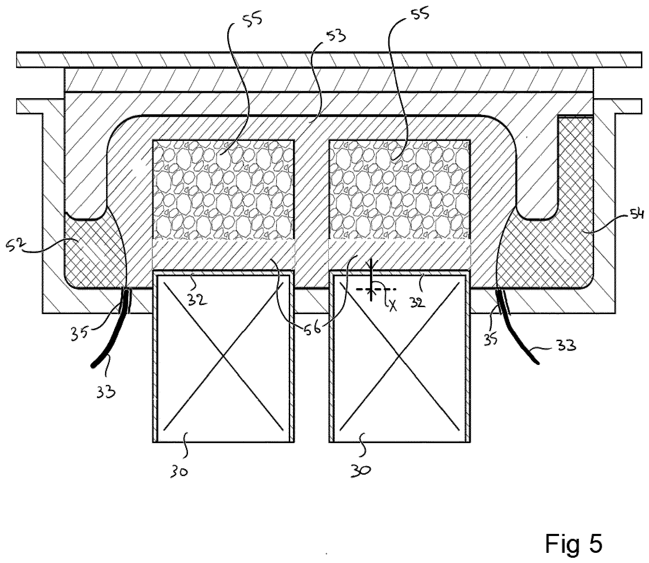

In a next stage, the mould cores 30 retract even further in the direction of the second position until the situation shown in figure 5 is reached, in which the horizontal mould wall parts 32 are located a distance X above the inner side of the bottom 29. Said distance X corresponds to the depth of the recesses 14. As already indicated before, X may also have value 0 mm. Subsequently granular foamable plastic EPS material of the same quality as the granular material that has been supplied to the region 53 is supplied to the region 56 via injectors in the horizontal mould wall parts 32. This material, too, is steamed for a short period, for example 1 sec, so that the grains in the region 56 will bond together.

Following that, steam is supplied to the material in all the regions 51-56 for a certain period of time, for example 6 sec, so as to enhance the bond of the material within each of the regions 51-56 but also of materials located adjacent to each other at the transition between the regions 51-56, as a result of which are suitable dimensional stability of the insulating part 3 as a whole is obtained. Moreover, the material will fully or at least practically fully form into a foam within the entire space of the regions 51-56.

In a final stage shown in figure 6, the mould 21 open's in that the first mould section 21 and the second mould section 23 are moved apart. Figure 6 shows how the mould cores 30 are fully retracted to the second position, which is not absolutely necessary for that matter. After the mould 21 has opened, the insulating part 3 comprising the insulation parts 11, 12 and 13 can be removed from the mould as already described in the foregoing.

In the production of the floor plate 1, a number of insulating parts 3, for example five insulating parts each having a length of 1.2 m, are placed in mutually aligned relationship in a bin having an open upper side, wherein upright longitudinal edges of the bin, which has a length of 6 m in this example, butt against the long sides of the insulating parts. The bin has a height which is at least equal to the thickness of the floor plate 1 to be produced. Subsequently reinforcing wires are tensioned in the regions of the ribs 5 and concrete is poured onto the insulating parts 3. Once the concrete has cured, a floor plate 1 is obtained.

Although the above description concerns the manner in which an insulating part 3 as a whole is formed in a mould having a closed mould space, there are also other ways of producing an insulating part according to the invention. Thus it is pointed out, for example, that it is also possible to product the various insulation parts 11, 12, 13 separately and subsequently glue them together. The design of the insulation parts 11, 12 or 13 can in that case be adapted so as to render them specifically suitable for such glueing.

It will be understood that the various insulation parts 11, 12 and 13 may in that case also be made of insulation materials other than EPS, for example polyisocyanurate foam, PUR foam, resol foam of extruded polystyrene (XPS). These types of materials can be made into insulation parts by using a method other than steaming in a mould. Think in this regard of continuous production processes, such as an extrusion process, for example.

If it is preferred to use insulation parts of a high-grade quality (a coefficient of thermal conductivity of less than 0.025 W/mK) as described in the foregoing directly under the recesses, it may be decided not to make use of the separating plates 33. The insulation parts in question can be positioned at suitable positions within the mould space 51, using engaging means such as suction nozzles or needles which may be provided with a stop element at a position some distance from their ends. The engaging means in question can be moved out of the mould space 51 once the installation parts in question are surrounded by granular EPS starting material or shortly after the start of the first steaming operation.

## Claims

1. A prefabricated floor element (1) comprising a structural part (2) of concrete, which comprises a cover layer (4) at the upper side of the floor element as well as at least one rib (5) adjacent to the bottom side of the cover layer, wherein the cover layer (4) and the at least one rib (5) together form an integral part of poured concrete, and an insulating part (3) of plastic material adjacent to the bottom side of the structural part (2), which insulating part (3) extends beside the at least one rib (5) as well as under the at least one rib (5), wherein the bottom side of the insulating part (3) forms the bottom side of the floor element (1), the insulating part (3) comprising at least two insulation parts, each of a plastic material, wherein the coefficients of thermal conductivity of the respective plastic materials of the at least two insulation parts are different from each other, in any case lower than 0.08 W/mK, wherein the at least two insulation parts comprise at least one first insulation part (13, 17) of a first material and a second insulation part (11) of a second plastic material, wherein the coefficient of thermal conductivity of the first material is smaller than the coefficient of thermal conductivity of the second material and the at least one first insulation part (13, 17) extends at least in part directly under the at least one rib (5), the at least one first insulation part (13, 17) only extending over part of the width of the insulating part (3).

2. A floor element (1) according to claim 1, **characterised in that** the at least one first insulation part (13) extends over the greater part of the volume of the insulating part (3) insofar as the latter extends under the at least one rib (5)

3. A floor element (1) according to claim 2, **characterised in that** the at least one first insulation part (13) extends over the entire part of the volume of the insulating part (3) insofar as the latter extends directly under the at least one rib (5).

4. A floor element (1) according to any one of the preceding claims, **characterised in that** the insulating part (3) comprises a first insulation part (13, 17) for each rib (5).

5. A floor element (1) according to any one of the preceding claims, **characterised in that** the at least two insulation parts further comprise at least one third insulation part (12) of a third plastic material, wherein, at least in cross-section, the at least one third insulation part (12) is surrounded by and located adjacent to the second insulation part (11), at least on the upper side and on the sides of the at least one third insulation part (12), preferably on the entire upper side or on the entire sides of the at least one third insulation part (12), wherein the coefficient of thermal conductivity of the second plastic material is lower than the coefficient of thermal conductivity of the third plastic material, and wherein the at least one third insulation part is at least in part, preferably entirely, provided beside the at least one rib (5).

6. A floor element (1) according to claim 5, **characterised in that**, in cross-section, the at least one third insulation part (12) is fully surrounded by and located adjacent to the second insulation part (11).

7. A floor element (1) according to claim 5 or 6, **characterised in that**, in vertical longitudinal section, the at least one third insulation part (12) is surrounded by and located adjacent to the second insulation part (11) at least on the upper side and on the sides of the at least one third insulation part (12), preferably entirely so.

8. A floor element (1) according to claim 5, 6 or 7, **characterised in that** the insulating part (3) comprises at least two third insulation parts (12) arranged side by side.

9. A floor element (1) according to claim 5, 6, 7 or 8, **characterised in that** the at least one third insulation part (12) has a compressive strength of less than 40 kPA.

10. A floor element (1) according to any one of the preceding claims, **characterised in that** the structural part (2) preferably comprises at least two parallel ribs (5), preferably at or at least near opposite long sides of the floor element (1).

## Patentansprüche

1. Vorgefertigtes Deckenelement (1), umfassend einen strukturellen Teil (2) aus Beton, das eine Deckschicht (4) an der Oberseite des Deckenelements sowie zumindest eine Rippe (5) angrenzend an die Unterseite der Deckschicht umfasst, wobei die Deckschicht (4) und die zumindest eine Rippe (5) zusammen einen integralen Bestandteil von gegossenem Beton bilden, und einen isolierenden Teil (3) aus Kunststoffmaterial, angrenzend an die Unterseite des strukturellen Teils (2), wobei sich der isolierende Teil (3) neben der zumindest einen Rippe (5) sowie unter die zumindest eine Rippe (5) erstreckt, wobei die Unterseite des isolierenden Teils (3) die Unterseite des Deckenelements (1) bildet, wobei der isolierende Teil (3) mindestens zwei Isolationsteile, jeweils aus einem Kunststoffmaterial, umfasst, wobei die Wärmeleitkoeffizienten der entsprechenden Kunststoffmaterialien der mindestens zwei Isolationsteile verschieden voneinander sind, in jedem Fall niedriger als 0,08 W/mK, wobei die mindestens zwei Isolationsteile zumindest einen ersten Isolationsteil (13, 17) eines ersten Materials und einen zweiten Isolationsteil (11) eines zweiten Kunststoffmaterials umfassen, wobei der Wärmeleitkoeffizient des ersten Materials kleiner als der Wärmeleitkoeffizient des zweiten Materials ist und wobei sich der zumindest eine erste Isolationsteil (13, 17) zumindest teilweise unter der zumindest einen Rippe (5) erstreckt, wobei sich der zumindest eine erste Isolationsteil (13, 17) nur über einen Teil der Breite des Isolationsteils (3) erstreckt.

2. Deckenelement (1) nach Anspruch 1, **dadurch gekennzeichnet, dass** sich der zumindest eine erste Isolationsteil (13) über den größeren Teil des Volumens des Isolationsteils (3) erstreckt, insoweit, dass sich der letztere unter die zumindest eine Rippe (5) erstreckt.

3. Deckenelement (1) nach Anspruch 2, **dadurch gekennzeichnet, dass** sich der zumindest eine erste Isolationsteil (13) über den ganzen Teil des Volumens des Isolationsteils (3) erstreckt, insoweit, dass sich der letztere direkt unter die zumindest eine Rippe (5) erstreckt.

4. Deckenelement (1) nach einem der vorhergehenden Ansprüche, **dadurch gekennzeichnet, dass** der isolierende Teil (3) einen ersten Isolationsteil (13, 17) für jede Rippe (5) umfasst.

5. Deckenelement (1) nach einem der vorhergehenden Ansprüche, **dadurch gekennzeichnet, dass** die mindestens zwei Isolationsteile ferner zumindest einen dritten Isolationsteil (12) eines dritten Kunststoffmaterials umfassen, wobei, zumindest im Querschnitt, der zumindest eine dritte Isolationsteil (12) von dem zweiten Isolationsteil (11) umgeben und angrenzend an diesen befindlich ist, zumindest an der Oberseite und an den Seiten des zumindest einen dritten Isolationsteils (12), vorzugsweise an der gesamten Oberseite oder an den gesamten Seiten des zumindest einen dritten Isolationsteils (12), wobei der Wärmeleitkoeffizient des zweiten Kunststoffmaterials niedriger als der Wärmeleitkoeffizient des dritten Kunststoffmaterials ist, und wobei der zumindest eine dritte Isolationsteil zumindest teilweise, vorzugsweise ganz, neben der zumindest einen Rippe (5) bereitgestellt ist.

6. Deckenelement (1) nach Anspruch 5, **dadurch gekennzeichnet, dass**, im Querschnitt, der zumindest eine dritte Isolationsteil (12) vollständig vom zweiten Isolationsteil (11) umgeben und angrenzend an diesen befindlich ist.

7. Deckenelement (1) nach Anspruch 5 oder 6, **dadurch gekennzeichnet, dass**, im vertikalen Längsschnitt, der zumindest eine dritte Isolationsteil (12) vom zweiten Isolationsteil (11) umgeben und angrenzend an diesen befindlich ist, zumindest an der Oberseite und an den Seiten des zumindest einen dritten Isolationsteils (12), vorzugsweise gänzlich.

8. Deckenelement (1) nach Anspruch 5, 6 oder 7, **dadurch gekennzeichnet, dass** der isolierende Teil (3) zumindest zwei dritte Isolationsteile (12) umfasst, die nebeneinander angeordnet sind.

9. Deckenelement (1) nach Anspruch 5, 6, 7 oder 8, **dadurch gekennzeichnet, dass** der zumindest eine dritte Isolationsteil (12) eine Druckfestigkeit von weniger als 40 kPa hat.

10. Deckenelement (1) nach einem der vorhergehenden Ansprüche, **dadurch gekennzeichnet, dass** der strukturelle Teil (2) vorzugsweise mindestens zwei parallele Rippen (5) umfasst, vorzugsweise bei oder zumindest nahe einander gegenüberliegenden Seiten des Deckenelements (1).

## Revendications

1. Élément de plancher préfabriqué (1) comprenant une partie structurelle (2) en béton, qui comprend une couche de recouvrement (4) au niveau du côté supérieur de l'élément de plancher ainsi qu'au moins une nervure (5) adjacente au côté inférieur de la couche de recouvrement, où la couche de recouvrement (4) et l'au moins une nervure (5) forment ensemble une partie intégrante de béton coulé, et une partie isolante (3) en matière plastique adjacente au côté inférieur de la partie structurelle (2), laquelle partie isolante (3) s'étend à côté de l'au moins une nervure (5) ainsi que sous l'au moins une nervure (5), où le côté inférieur de la partie isolante (3) forme le côté inférieur de l'élément de plancher (1), la partie isolante (3) comprenant au moins deux parties d'isolation, chacune en matière plastique, où les coefficients de conductivité thermique des matières plastiques respectives des au moins deux parties d'isolation sont différents les uns des autres, dans tous les cas inférieurs à 0,08 W/mK, où les au moins deux parties d'isolation comprennent au moins une première partie d'isolation (13, 17) en une première matière et une deuxième partie d'isolation (11) en une deuxième matière plastique, où le coefficient de conductivité thermique de la première matière est inférieur au coefficient de conductivité thermique de la deuxième matière et l'au moins une première partie d'isolation (13, 17) s'étend au moins en partie directement sous l'au moins une nervure (5), l'au moins une première partie d'isolation (13, 17) ne s'étendant que sur une partie de la largeur de la partie isolante (3).

2. Élément de plancher (1) selon la revendication 1, **caractérisé en ce que** l'au moins une première partie d'isolation (13) s'étend sur la plus grande partie du volume de la partie isolante (3) dans la mesure où cette dernière s'étend sous l'au moins une nervure (5).

3. Élément de plancher (1) selon la revendication 2, **caractérisé en ce que** l'au moins une première partie d'isolation (13) s'étend sur toute la partie du volume de la partie isolante (3) dans la mesure où cette dernière s'étend directement sous l'au moins une nervure (5).

4. Élément de plancher (1) selon l'une quelconque des revendications précédentes, **caractérisé en ce que** la partie isolante (3) comprend une première partie d'isolation (13, 17) pour chaque nervure (5).

5. Élément de plancher (1) selon l'une quelconque des revendications précédentes, **caractérisé en ce que** les au moins deux parties d'isolation comprennent en outre au moins une troisième partie d'isolation (12) en une troisième matière plastique, où, au moins en section transversale, l'au moins une troisième partie d'isolation (12) est entourée de et située de manière adjacente à la deuxième partie d'isolation (11), au moins sur le côté supérieur et sur les côtés de l'au moins une troisième partie d'isolation (12), de préférence sur tout le côté supérieur ou sur tous les côtés de l'au moins une troisième partie d'isolation (12), où le coefficient de conductivité thermique de la deuxième matière plastique est inférieur au coefficient de conductivité thermique de la troisième matière plastique, et où l'au moins une troisième partie d'isolation est au moins en partie, de préférence entièrement, prévue à côté de l'au moins une nervure (5).

6. Élément de plancher (1) selon la revendication 5, **caractérisé en ce que**, en section transversale, l'au moins une troisième partie d'isolation (12) est entièrement entourée de et située de manière adjacente à la deuxième partie d'isolation (11).

7. Élément de plancher (1) selon la revendication 5 ou 6, **caractérisé en ce que**, en section longitudinale verticale, l'au moins une troisième partie d'isolation (12) est entourée de et située de manière adjacente à la deuxième partie d'isolation (11) au moins sur le côté supérieur et sur les côtés de l'au moins une troisième partie d'isolation (12), de préférence entièrement.

8. Élément de plancher (1) selon la revendication 5, 6 ou 7, **caractérisé en ce que** la partie isolante (3) comprend au moins deux troisièmes parties d'isolation (12) agencées côte à côte.

9. Élément de plancher (1) selon la revendication 5, 6, 7 ou 8, **caractérisé en ce que** l'au moins une troisième partie d'isolation (12) a une résistance à la compression inférieure à 40 kPA.

10. Élément de plancher (1) selon l'une quelconque des revendications précédentes, **caractérisé en ce que** la partie structurelle (2) comprend de préférence au moins deux nervures parallèles (5), de préférence au niveau ou au moins à proximité des côtés longs opposés de l'élément de plancher (1).
